# EUROPÄISCHE PATENTSCHRIFT

(11) **EP 3 819 359 B1**
(45) Veröffentlichungstag und Bekanntmachung des Hinweises auf die Patenterteilung: **12.07.2023**
(21) Anmeldenummer: 19208115.6
(22) Anmeldetag: 08.11.2019
(51) Int. Cl.: C10J 3/52, C10J 3/72, C10J 3/82

(54) **VERFAHREN UND VORRICHTUNG ZUM EINSTELLEN DES FÜLLSTANDS IN EINEM SCHWEBEBETTREAKTOR**
METHOD AND DEVICE FOR ADJUSTING THE FILL LEVEL IN A FLOATING BED REACTOR
PROCÉDÉ ET DISPOSITIF DE RÉGLAGE DU NIVEAU DE REMPLISSAGE DANS UN RÉACTEUR À LIT FLOTTANT

(43) Veröffentlichungstag der Anmeldung: 12.05.2021
(73) Patentinhaber: SynCraft Engineering GmbH, 6130 Schwaz (AT)
(72) Erfinder: HUBER, Marcel, 6404 Polling (AT); KRUEGER, Jan, 6200 Jenbach (AT); KREUTNER, Georg, 6260 Bruck am Ziller (AT)
(74) Vertreter: Vossius & Partner Patentanwälte Rechtsanwälte mbB

(56) Entgegenhaltungen:
- EP-A1- 2 862 914
- CN-U- 209 490 802
- GB-A- 965 709
- GB-A- 1 577 625

## Beschreibung

### Gebiet der Erfindung

Die vorliegende Erfindung betrifft eine Vorrichtung sowie ein Verfahren, um den Füllstand bzw. die Füllhöhe in einem Vergaser für kohlenstoffhaltiges Material, insbesondere einen Schwebebettvergaser bzw. Schwebebettreaktor einzustellen. Insbesondere betrifft die vorliegende Erfindung ein Verfahren zum Austragen von Partikeln aus einem Schwebebettvergaser mit dem der Füllstand bzw. die Füllhöhe des in Schwebe gehaltenen Bettes einstellbar bzw. definiert wird.

Im Rahmen der vorliegenden Anmeldung handelt es sich bei einem Schwebebett bzw. Schwebefestbett um ein entgegen der Gewichtskraft betriebenes, durch den eintretenden Gasstrom schwebendes, also vom Gaseintritt her abgehobenes Festbett, das im Gegensatz zu einem Wirbelbett oder fluidisiertem Bett eine Schüttung beinhaltet, die in der Lage ist Schubspannungen zu übertragen und somit über einen inneren Reibungswinkel von >>0° verfügt, vorzugsweise zwischen 35° und 50°. Zudem wird das Schwebefestbett unterhalb seiner schüttungsmechanischen Fließgrenzen betrieben und gilt daher als stabiles, in Schwebe gehaltenes Festbett. Wird ein Schwebefestbett über seiner Fließgrenze betrieben, wird es instabil und geht damit von einem schwebenden Festbett in ein Wirbelbett über.

### Stand der Technik

Aus der DE 10 2007 012 452 A1 ist eine Vorrichtung zur Vergasung organischer Stoffe in einem Schwebebett bekannt. Die Schwebebettvergasung beschreibt ein gestuftes Vergasungsverfahren, bei dem vorzugsweise nach erfolgter Pyrolyse bzw. Verkohlung eines kohlenstoffhaltigen Materials zu einer Art von Koks eine möglichst vollständige Vergasung des erzeugten Koks zusammen mit einem Pyrolysegas in einem Schwebebettreaktor in ein sog. Produktgas erfolgt. Das Produktgas wird auch als Schwachgas bzw. Synthesegas bezeichnet. Ein derartiger Schwebebettreaktor umfasst einen an einen Einlass anschließenden und sich im Wesentlichen kegelstumpfförmig weitenden Bereich, der in einen endseitig mit einem Auslass versehenen Zylinderabschnitt übergeht. Dieser Körper beinhaltet ein im Zustrom eines Vergasungsmittels in der Schwebe gehaltenes Festbett, das aus Koks des vorangegangenen Pyrolyseprozesses gebildet wird. Dieser Koks wird durch eine entsprechende Einbringung und Dosierung eines Vergasungsmittels, wie z.B. Luft, in einer erhöhten Position in Schwebe gehalten und kontinuierlich in ein Produktgas umgesetzt bzw. vergast.

Um den Füllstand, d.h., die Höhe des Schwebebetts bzw. die Lage einer oberen Grenzschicht des Schwebebetts in einem Schwebefestbettvergaser einzustellen, ist beispielsweise eine Austragseinheit in Form eines Überlaufs im oberen Bereich des Schwebebettreaktors bekannt, wie er in der Figur 5 der WO 2008/110383 dargestellt ist, und unten in Bezug auf **Figur 1** der vorliegenden Anmeldung genauer diskutiert wird.

Diese bekannte Austragseinheit bzw. der Überlauf dient insbesondere zur Entfernung von ungewünschten Materialien, wie Asche, welche nur bedingt bzw. nicht ausreichend, oder nicht in ausreichend kurzer Zeit reduziert und somit in ihre Gasform übergeführt werden. Zudem wird auch auf die EP 2 886 190 verwiesen, in der gelehrt wird, etwaige Störstoffe mit einer höheren Dichte als Koks, wie Steine oder Metallteile, unterhalb des Schwebebettreaktors aus dem Materialstrom zu entfernen.

Der Überlauf der WO 2008/110383 funktioniert im Wesentlichen gravimetrisch, d.h., schwere Teilchen fallen nach unten, sodass leichtere Materialien, die in Schwebe gehalten werden, noch nicht ausgetragen werden, und somit erst ausgetragen werden, sobald sie zu größeren Teilchen bzw. Ansammlungen zusammenklumpen.

In der EP 2 862 914 ist ein System mit Lanzen im oberen Bereich eines Schwebebettreaktors in Kombination mit Sensoren beschrieben. Mit diesen Lanzen kann zusätzliches Vergasungsmittel in eine obere nicht tragende Schicht des Schwebebetts eingebracht werden, wobei der Begriff nichttragende Schicht jene Schicht beschreibt, in derer die Querkräfte in der Schüttung nicht mehr zur Aufrechterhaltung eines stabilen Schwebefestbetts von Relevanz sind. Zudem wird in der EP 2 862 914 beschrieben, dass ein Überlaufen des Schwebebettreaktors verhindert werden kann, wenn an seinem oberen Ende durch einen Sensor eine Füllstandmessung vorgesehen ist. Beispielsweise wird ein Radarsensor als beispielhafter Füllstandsensor genannt.

### Zusammenfassung der Erfindung

Es ist Aufgabe der vorliegenden Erfindung, ein Verfahren und eine entsprechende Vorrichtung für einen zuverlässigen und sicheren Langzeitbetrieb eines Schwebebettreaktors zu schaffen, die eine wesentlich einfachere Steuerung bzw. Regelung ermöglicht.

Die Aufgabe wird durch die Merkmale der unabhängigen Ansprüche gelöst. Weitere bevorzugte erfindungsgemäße Ausführungen sind in den abhängigen Ansprüchen beansprucht.

Die Erfinder der vorliegenden Erfindung haben erkannt, dass die Entfernung von Material aus dem oberen Teil des Schwebebetts Vorteile bezüglich Stabilität und Effizienz hat, wobei erfindungsgemäß vorzugsweise auf Sensoren und damit verbundene Schaltungen weitgehend verzichtet werden kann. Beispielsweise wird auf eine einfach Art und Weise Material das nicht weiter reduziert werden kann, wie Asche, vom oberen Bereich des Schwebebetts durch Absaugen entfernt, wodurch der obere Füllstand innerhalb des Schwebebettreaktors einstellbar bzw. regulierbar wird.

Vorzugsweise wird das erfindungsgemäße Verfahren zusammen mit dem Verfahren zum Austragen von Störstoffen verwendet, wie es in der Anmeldung EP 2 886 190 beschrieben wird. Mit anderen Worten, es ist bevorzugt, dass Teilchen mit einer höheren Dichte als das Koksmaterial, wie beispielsweise Steine, Steinchen, Sandkörner, Schlacken, Nägel, Schrauben und/oder sonstige Metallteilchen bereits frühzeitig aus dem Materialstrom entfernt werden, sodass sich diese Störstoffe vorzugsweise erst gar nicht innerhalb des Schwebebetts ansammeln können.

Zunächst betrifft die vorliegende Erfindung ein Verfahren mit dem insbesondere der Füllstand in einem Vergaser für kohlenstoffhaltiges Material in Form eines Schwebebettreaktors einstellbar bzw. regulierbar ist. Im Schwebebettreaktor wird Biomasse und/oder Koks in ein Produktgas (Schwachgas bzw. Synthesegas) umgewandelt. Zunächst wird ein im Wesentlichen konisch nach unten verjüngender Schwebebettreaktor bereitgestellt, der eine obere Reaktordecke bzw. einen oberen Reaktordeckel aufweist und am unteren Ende eine Eingangsöffnung aufweist. Erfindungsgemäß wird Biomasse und/oder Koks K von unten nach oben in Form eines Gasstroms durch diese Eingangsöffnung in den Schwebebettreaktor hinein befördert. Zudem wird ein gasförmiges Vergasungsmittel V ebenfalls von unten nach oben, d.h. entgegen der Schwerkraft, in den Schwebebettreaktor eingeführt. Der Koks K kann beispielsweise in Form eines Vollstroms horizontal, vertikal oder in einem beliebigen Winkel dazwischen ausgerichtet sein und dann zusammen mit dem Vergasungsmittel V, das von unten nach oben gerichtet ist, in den Schwebebettreaktor transportiert werden. Dies hat beispielsweise Vorteile hinsichtlich der Abtrennung von schweren Feststoffen wie Steinen oder Metallteilchen. Das erfindungsgemäße Verfahren ist nicht auf eine bestimmte Ausführungsform des Einführens des Koks K und des Vergasungsmittels V beschränkt, da das erfindungsgemäße Verfahren sich im Wesentlichen mit der Abführung des Schwachgases am oberen Ende des Schwebebettreaktors beschäftigt. Entscheidend ist nur, dass sich innerhalb des Reaktors, vorzugsweise mindestens im konischen Teil des Reaktors, ein in Schwebe gehaltenes Festbett ausbildet. Dieses Bett ist vorzugsweise vom Ort der Eingangsöffnung abgehoben bzw. beabstandet.

Das Schwebebett erstreckt sich zwischen einer unteren Grenzschicht und einer oberen Grenzschicht innerhalb des Reaktors, wobei die Strecke zwischen diesen Grenzschichten die Dicke bzw. Mächtigkeit des Schwebebetts definiert und die vertikale Lage/Position der oberen Grenzschicht im Folgenden als Füllhöhe bezeichnet wird.

In einem Gleichgewichtsbetrieb eines Schwebebetts wird genau so viel Vergasungsmittel eingebracht, dass die Menge an Koks im Schwebebettreaktor konstant gehalten wird. Abbau durch eine kontinuierliche Umsetzung von Koks in Produktgas und Zugang von neuen Bio-Koks-Stücken halten sich also die Waage. Aufgrund einer i.d.R. inhomogenen Zusammensetzung der zugeführten Biomasse, aber auch aufgrund von Messtoleranzen bei der Biomassebeschickung und Vergasungsmitteldosierung kann dieser Gleichgewichtsbetrieb zeitlich variieren, so dass das Schwebebett innerhalb geringer Grenzen intermittierend in einem Aufbau- und Abbaubetrieb gefahren wird.

Während des Aufbaubetriebs gelangt mehr Koks in den Schwebebettreaktor, als jeweils aktuell abgebaut wird. Es steigt damit die Menge an Vergasungskoks im Reaktor an. Ein Bereich im Schwebebettreaktor wird dadurch ständig durch frisches Material ersetzt, wobei überschüssiges Material aus dieser Zone nach oben hin in das Schwebebett eingebaut wird. Der Füllstand im Reaktor steigt also immer weiter an. Um ein Überlaufen des Schwebebettreaktors zu verhindern, ist gemäß der vorliegenden Erfindung an seinem oberen Ende mindestens ein Absaugrohr vorgesehen, mit dem Material bzw. Teilchen des Schwebebetts abgesaugt werden können, wodurch sich der Füllstand einstellen lässt. Vorzugsweise kann dadurch der von oben her als Füllhöhe im Schwebebettreaktor messbare Füllstand im Wesentlichen konstant gehalten werden.

Oberhalb des konischen Teils des Reaktors kann sich auch ein im Wesentlichen zylindrischer Teil mit im Wesentlichen konstanten Durchmesser befinden, wobei sich das in Schwebe gehaltene Bett über dem konischen Teil auch im zylindrischen Teil ausbilden kann. Wesentlich für die Ausbildung des in Schwebe gehaltenen Betts sind die verjüngende Form (nach unten) bzw. erweiternde Form (in Richtung nach oben) des Reaktors sowie die Strömungsgeschwindigkeit des gasförmigen Vergasungsmittels in Abhängigkeit der Materialeigenschaften der Biomasse und/oder des Koks. Hierbei wird die Strömungsgeschwindigkeit so an die Form des Strömungsquerschnitts des konischen Reaktors unter Berücksichtigung der Materialeigenschaften der Biomasse und/oder dem Koks angepasst, dass sich das in Schwebe gehaltene Bett ausbildet. Es hat sich gezeigt, dass die Strömungsgeschwindigkeit experimentell einfach an die Gegebenheiten der konischen Form und die Materialeigenschaften angepasst werden kann, um das gewünschte in Schwebe gehaltene Bett auszubilden. Andererseits hat sich auch gezeigt, dass eine theoretische Beschreibung bzw. eine empirische Parametrisierung zur Beschreibung des Schwebebetts noch nicht bzw. nicht ausreichend genau möglich ist. Ein Fachmann wird jedoch durch einfache Variation der Strömungsgeschwindigkeit ein entsprechendes in Schwebe gehaltenes Festbett einfach ausbilden können.

Ein in Schwebe gehaltenes Festbett ist grundsätzlich von einem bekannten Festbett, das meist auf einem Gitter aufliegt, oder einem Wirbelbett, das hohe Teilchengeschwindigkeiten innerhalb des Wirbelbettes aufweist, zu unterscheiden. Das erfindungsgemäße schwebende Festbett hat ähnlich wie ein traditionelles Festbett ein "festes Bett", d.h., die Teilchen des Betts bewegen sich quasi nicht. Allerdings liegt ein in Schwebe gehaltenes Bett insbesondere nicht auf Gittern oder sonstigen mechanischen Strukturen auf, sondern wird vom Gasstrom in der Schwebe gehalten. Die konische Form des Reaktors ist somit keine Auflage für das Bett, sondern lediglich eine seitliche Stütze. Entsprechend kann das in Schwebe gehaltene Bett beispielsweise über die Teilchengeschwindigkeit der Feststoffe beschrieben werden.

Vorzugsweise liegt die Teilchengeschwindigkeit im Bereich des Festbetts bei annähernd 0 m/s. Da das Festbett im Laufe der Zeit jedoch reduziert wird, gibt es über einen längeren Zeitraum gesehen eine (sehr) langsame Bewegung der Teilchen innerhalb des Betts (vorzugsweise nach oben), die jedoch vorzugsweise kleiner als 1m/s ist, vorzugweise kleiner als 0,5m/s, vorzugweise kleiner als 0,2m/s, vorzugweise kleiner als 0,05m/s. Vorzugsweise bezieht sich diese Teilchengeschwindigkeit auf einen Mittelwert über alle Teilchen des Betts.

Die Geschwindigkeit der Gasteilchen bzw. des Gases, das zum einen das Festbett in Schwebe hält und auch das Bett durchströmt ist vorzugsweise deutlich größer, vorzugsweise größer als 2m/s, vorzugsweise größer als 5m/s, vorzugsweise größer als 10m/s. Anstelle der absoluten Werte der Geschwindigkeiten der Teilchen des Betts und des Gases kann auch das Relativverhältnis beider Geschwindigkeiten zur Charakterisierung des Schwebebetts verwendet werden. So ist das Verhältnis Gasgeschwindigkeit/Teilchengeschwindigkeit vorzugsweise >10, vorzugsweise >50, vorzugsweise >100. Im Vergleich dazu würde bei einem Wirbelbettvergaser sich dieses Verhältnis in der Größenordnung von 1 bewegen.

Das in Schwebe gehaltene Bett kann beispielsweise auch dadurch charakterisiert werden, dass eine axiale Feststoffdurchmischung weitgehend nicht stattfindet, d.h., eine Durchmischung von unten nach oben bzw. oben nach unten findet innerhalb des festen Betts quasi nicht statt. Vielmehr wandern die Teilchen im Festbett sehr langsam von unten, wo sie eingeführt werden und zunächst die tragende Schicht bilden, im Laufe der Vergasung nach oben, bis sie erfindungsgemäß abgesaugt werden. Eine Bewegung der Feststoffteilchen in die Gegenrichtung des Gasstroms, d.h., nach unten, findet quasi nicht statt.

Weiterhin kann das Schwebebett auch dadurch beschrieben werden, dass innerhalb des Betts Scherkräfte zwischen den Feststoffteilchen übertragen werden und sich ein innerer Reibungswinkel von deutlich >0° ausprägt, vorzugsweise >10°, vorzugsweist >20°, vorzugsweise >30°, vorzugsweise >35° und vorzugsweise <60°, beispielsweise zwischen 35° und 50°.

Das in Schwebe gehaltene Festbett in dem Schwebefestbettreaktor hat als weitere Eigenschaft vorzugsweise ein schüttungsmechanisches Horizontallastverhältnis Lambda (A) zwischen 1 und 0, also weder 1 (Flüssigkeit) noch 0 (Festkörper), besonders bevorzugt liegt Lambda erfindungsgemäß zwischen 0,3 und 0,6. Der Wert λ ist beispielsweise in dem Buch von Dietmar Schulze mit dem Titel "Pulver und Schüttgüter: Fließeigenschaften und Handhabung", erschienen am 12.12.2008 im Springerverlag wie folgt definiert.

Auf ein Schüttgutelement in einem mit Schüttgut gefüllten Behälter wirken in vertikaler Richtung, d.h., von oben und von unten, die positive Normalspannung σᵥ >0 (Druckspannung). Verhielte sich das Schüttgut wie eine ruhende Newtonsche Flüssigkeit, würde in der horizontalen Richtung eine gleich große Spannung wie in der vertikalen Richtung (und allen anderen Richtungen) wirken. Tatsächlich verhält sich ein Schüttgut aber in vielen Beziehungen völlig anders als eine Flüssigkeit, so dass Analogiebetrachtungen zwischen Schüttgut und Flüssigkeit häufig zu falschen Rückschlüssen führen. Im Schüttgut stellt sich aufgrund der vertikalen Belastung in der horizontalen Richtung eine Spannung σₕ ein, die kleiner ist als die Vertikalspannung σᵥ Das Verhältnis der Spannung σₕ und σᵥ ist als Horizontallastverhältnis λ (auch "Horizontalspannungsverhältnis"; international auch mit K bezeichnet) definiert: λ = σₕ/ σᵥ.

Das erfindungsgemäße Verfahren ist besonders vorteilhaft zur Einstellung der Höhe bzw. Position der oberen Grenzschicht oder Kante des Festbetts bzw. des oberen Bereichs des Festbetts innerhalb des Reaktors. Insbesondere wird mit Hilfe mindestens eines durch die Reaktordecke (bzw. Reaktordeckel) hindurch ragendes, nach unten in den Reaktorraum hineinragendes Absaugrohr Gas zusammen mit Partikeln aus dem Reaktor abgesaugt. Vorzugsweise bestimmt die Länge des Absaugrohrs die Lage der oberen Kante bzw. der oberen Grenzschicht des Schwebebetts innerhalb des Reaktors.

Erfindungsgemäß kann das mindestens eine Rohr im Wesentlichen mittig im Deckel angeordnet sein. Mit anderen Worten, das Rohr und der Reaktor sind vorzugsweise konzentrisch angeordnet. Erfindungsgemäß kann das Rohr auch seitlich versetzt von der Mitte im Deckel des Reaktors angebracht sein, d.h. seitlich von der Mittelachse des Reaktors. Zudem kann es auch vorteilhaft sein, dass mehrere Rohre im Reaktordeckel zum Absaugen angeordnet sind. Diese Rohre können alle oder teilweise gleich tief ins Innere des Reaktors hineinragen oder unterschiedlich tief hineinragen.

Mehrere Rohre die unterschiedlich tief in den Reaktor hineinragen können beispielsweise vorteilhaft sein, um die Füllstandshöhe innerhalb des Reaktors unterschiedlich einzustellen. So kann beispielweise nur eines der mehreren Rohre zum Absaugen verwendet werden, wodurch sich die Füllhöhe dann an die Länge des jeweiligen Rohres, das verwendet wird, anpasst.

Gemäß einer weiteren erfindungsgemäßen Ausführungsform kann mindestens ein Rohr verstellbar bzw. verschiebbar ausgeführt sein, sodass sich die Länge, wie weit das Rohr in den Reaktor hineinragt, einstellen lässt. Dies kann beispielsweise vorteilhaft sein, wenn der Reaktor im Laufe der Zeit mit sehr unterschiedlicher Biomasse betrieben wird, und die Höhe des Schwebebetts verändert werden soll.

Erfindungsgemäß werden die Begriffe Schwebebett bzw. Schwebefestbett synonym verwendet. Entsprechend werden die Begriffe Schwebebettvergaser bzw. Schwebebettreaktor bzw. Schwebefestbettvergaser bzw. Schwebefestbettreaktor sowie Reduktionseinheit mit darin ausgebildetem Schwebebett/Schwebefestbett bzw. Reduktionseinheit mit einem in Schwebe gehaltenen Bett/Festbett synonym verwendet. Mit anderen Worten, ein Schwebebett kann beschrieben werden als eine als Festbett ausgebildete Schicht/Bett innerhalb des Vergasungsreaktors die/das von einem unteren Einlassbereich abgehoben ist, also im vollen Sinn des Wortes wirklich auf der Gasströmung "schwebt", wie es bei der Schwebebettvergasung gemäß der Offenbarung der DE 10 2007 012 452 A1 bzw. der WO 2008/110383 der Fall ist. Insbesondere wird erfindungsgemäß auf die Grundprinzipien des Schwebebettvergasers vollumfänglich Bezug genommen.

Demnach zeichnet sich ein erfindungsgemäßes Verfahren beispielsweise dadurch aus, dass verkohlte Biomasse im Zustrom des Vergasungsmittels als Festbett in dem Schwebebettreaktor in der Schwebe gehalten und oberhalb dieses Schwebebetts vorhandene Materialien im Wesentlichen von oben im Reaktor abgesaugt werden.

Der erfindungsgemäße Schwebebettvergaser ist jedoch nicht beschränkt auf die in den genannten Druckschriften beschriebenen Prozesse zur Herstellung eines Gases aus Biomasse. Vielmehr ist das Verfahren der erfindungsgemäßen Schwebebett-Vergasung auf jegliche entsprechend aufbereitete kohlenstoffhaltige Feststoffquelle anwendbar. So können beispielsweise auch getrocknete Klärschlämme aufgrund der Zusammensetzung aus überwiegend kohlenstoffhaltigem Material auch ohne Vorschaltung einer Pyrolyseeinheit umgesetzt werden. Gleiches gilt grundsätzlich auch für eine erfindungsgemäße Verwertung von extern hergestellter Kohle oder Koks. Es ist also für den Betrieb eines Schwebebettreaktors nicht zwingend erforderlich, dass eine zugeführte Biomasse bereits weitgehend verkohlt ist, wenngleich nachfolgend nur noch von einer Zuführung von Koks die Rede sein wird.

Reste der nicht in Gas umgewandelten Feststoffe können erfindungsgemäß im Wesentlichen kontinuierlich entfernt werden, ohne dass eine produzierte Gasmenge, deren Qualität oder ein Gesamtwirkungsgrad einer Anlage negativ beeinflusst werden.

Erfindungsgemäß wird das produzierte Schwachgas zusammen mit Partikeln aus dem Schwebebettreaktor abgesaugt, wobei die abgesaugten Partikel vorzugsweise durch eine Filtervorrichtung herausgefiltert werden, um das Schwachgas anschließend zu verwenden.

Erfindungsgemäß können die Eigenschaften des austretenden Gasstroms noch spezieller beeinflusst bzw. geregelt werden, indem in den oberen Teil des in Schwebe gehaltenen Betts mittels einer Lanze zusätzliches Gas zugeführt wird. Insbesondere kann durch das Einführen des zusätzlichen Gases und Absaugung der Partikel sowohl die Menge als auch die Eigenschaften des austretenden Gasstroms aus dem Reaktor beeinflusst werden.

### Kurze Beschreibung der Figuren

Nachfolgend werden weitere Merkmale und Vorteile erfindungsgemäßer Ausführungsbeispiele unter Bezugnahme auf ein Ausführungsbeispiel im Vergleich zu einer bekannten Vorrichtung anhand der Zeichnung näher erläutert. Darin zeigen:
- Figur 1:: eine schematische Darstellung einer bekannten Reduktionseinheit gemäß der WO 2008/110383; und
- Figur 2:: eine schematische Darstellung einer Reduktionseinheit mit einer erfindungsgemäßen Austrageinrichtung in Form eines Absaugrohrs.

### Detaillierte Beschreibung der Figuren

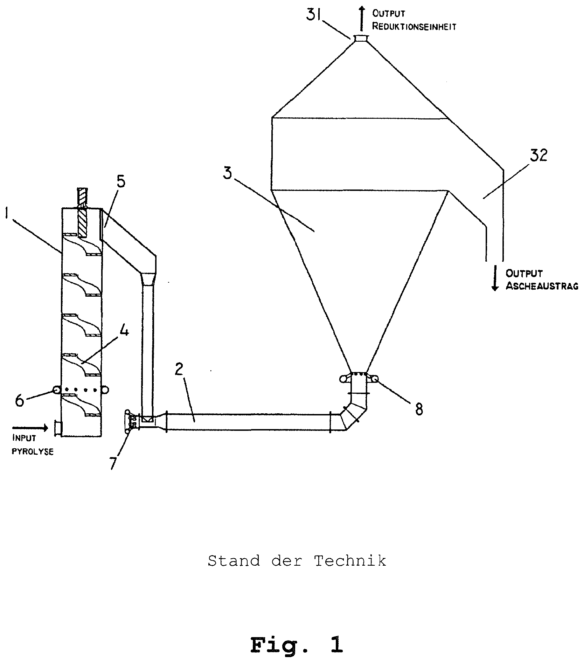

**Figur 1** zeigt einen Schwebebettvergaser 3 wie er aus der WO 2008/110383 bzw. dem entsprechenden Patent EP 2 129 749 B1 bekannt ist. Bezüglich der dargestellten Pyrolyseeinheit 1, Oxidationseinheit 2, Steigschnecke 4, Auslass 5, Gasdüse 6 sowie Düseneinheiten 7 und 8 wird auf die Offenbarung in der WO 2008/110383 verwiesen, da die erfindungsgemäße Vorrichtung im Wesentlichen den Schwebebettvergaser 3 betrifft. In dem bekannten Schwebebettvergaser 3 ist eine Austragseinheit bzw. ein Überlauf 32 (siehe "Output Ascheaustrag" in Fig. 1) dargestellt, wobei diese Austragseinheit 32 an dem bekannten Schwebebettvergaser so angebracht ist, dass Materialien vor bzw. unterhalb eines Gasausgangs 31 aus dem Schwebebettvergaser 3 entfernt werden können. Diese Austragseinheit 32 kann, zumindest stellenweise, um den Schwebebettvergaser herum ringförmig angebracht sein. Die Austragseinheit bzw. der Überlauf 32 dient insbesondere zur Entfernung von ungewünschten Materialien, wie Asche oder Fremdkörpern, aus dem Schwebebettvergaser 3 welche nur bedingt bzw. nicht ausreichend, oder nicht in ausreichend kurzer Zeit reduziert und somit in ihre Gasform übergeführt werden können. Diese unerwünschten Materialien werden beispielsweise ab einer vorgegebenen bzw. einstellbaren Füllhöhe des Schwebebetts gravimetrisch, und/oder über ein mechanisches System in die Austragseinheit ausgetragen (Überlauf).

Die Reduktionseinheit bzw. der Schwebebettvergaser 3 weist vorzugsweise mindestens einen Ausgang 31 zum Abführen des erzeugten brennbaren Gases (Synthesegas) auf, der auch als Gas-Ausgang 31 ("Output Reduktionseinheit") bezeichnet wird. Am Gas-Ausgang 31 des Schwebebettvergasers 3 tritt ein GasStrom des hergestellten Synthesegases nach oben, d.h. entgegen der Schwerkraft aus, das nach optionalen Schritten wie Abkühlung, beispielsweise in einem Wärmetauscher, und/oder Reinigung, einem Gasspeicher bzw. einer Verbrennungsmaschine und/oder einer anderen Verwertungsform zugeführt werden kann. In dieser Ausführungsform aus dem Stand der Technik verläuft der obere Teil des Schwebebettvergasers konisch verjüngend, so dass das leichte Gas wie von einem Trichter zum Gas-Ausgang geführt wird.

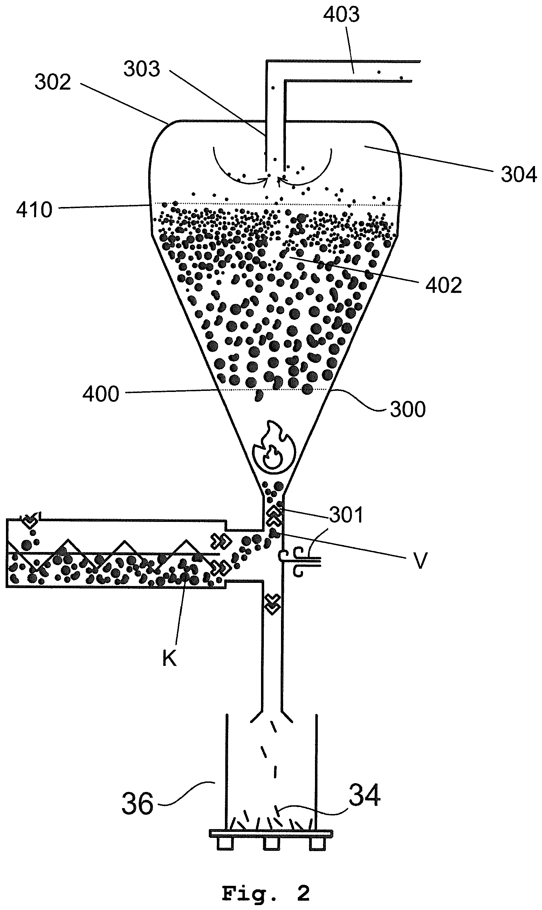

**Figur 2** zeigt einen erfindungsgemäßen Schwebebettvergaser 300 mit einem darin ausgebildeten Schwebebett 402. Zur Ausbildung des Schwebebetts 402 verläuft der untere Teil des Schwebebettvergasers 300 im Wesentlichen konisch erweiternd nach oben, ähnlich oder gleich wie aus dem Stand der Technik bekannt. Die Biomasse und/oder Koks K wird in diese Ausführungsform von links mit einer Transporteinrichtung im Wesentlichen horizontal unterhalb der Eingangsöffnung 301 des Reaktors befördert. Beispielsweise kann dies durch einen Spiral- bzw. Schneckenförderer zur bedarfsgerechten Dosierung erfolgen. Das gasförmige Vergasungsmittel V wird in dieser Darstellung von der rechten Seite eingebracht, sodass die Biomasse/Koks im Zustrom des Vergasungsmittels V im Wesentlichen senkrecht nach oben, d.h., im Wesentlichen entgegen der Schwerkraft durch den Einlassbereich 301 des Reaktors in den Reaktor 300 befördert. Die vorliegende Erfindung ist jedoch nicht auf diese spezielle Ausgestaltung des Einführens beschränkt und alle denkbaren Ausführungsformen zur Ausbildung eines Schwebebettes sind möglich. Beispielsweise ist es vorteilhaft, wenn das Vergasungsmittel V von unten kommt (vertikal) und die Biomasse seitlich, d.h. horizontal oder in einem beliegen Winkel zwischen 0-180° zur Vertikalen, vorzugsweise in einem Winkel zwischen 45° und 135°, weiter bevorzugt in einem Winkel zwischen 70° und 110°, vorzugsweise im Wesentlichen senkrecht (90°) auf den vertikal aufsteigenden Gasstrom des Vergasungsmittels V trifft, um unerwünschte Störstoffe schon frühzeitig abzutrennen.

Vorzugsweise unterscheidet sich der obere Teil des erfindungsgemäßen Schwebebettvergasers 300 vom Schwebebettvergaser 30 aus der Fig. 1 dadurch, dass sich der Deckel 302 nicht nach oben konisch verjüngt, sondern im Wesentlichen horizontal verläuft. Da das erzeugte Synthesegas durch das Rohr 303, das von oben nach unten durch den Deckel 302 in den Innenraum des Vergasers 300 hineinragt, abgesaugt wird, ist ein konisch verjüngender Deckel nicht nötig. Mit anderen Worten, aufgrund der Absaugung des Gases aus dem Innenraum des Vergasers 300 ist ein nach oben gerichteter Gastrichter nicht notwendig.

Da erfindungsgemäß das Synthesegas nicht nur durch die nach oben strömende Wärme nach oben strömt, sondern aktiv durch das Rohr 303 abgesaugt wird, wird auch teilweise Gas, das sich oberhalb der Unterkante des Rohrs 303 und unterhalb des Deckels 302 ansammelt effektiv abgesaugt (siehe symbolische Pfeile in Fig. 2). Zusätzlich kann auch aktiv Material aus dem oberen Teil des ausgebildeten Schwebebetts abgesaugt werden. Dies hat den entscheidenden Vorteil, dass der obere Füllstand effektiv und gewissermaßen automatisch in Abhängigkeit der Länge des in den Vergaser hineinragenden Rohrs 303 steuerbar bzw. regelbar ist. Vorzugsweise ist die obere Kante (obere Grenzschicht) des in Schwebe gehaltenen Betts auf ca. der gleichen Höhe innerhalb des Reaktors wie das untere Ende des Rohrs 303. Hierbei ist zu beachten, dass dies in der Fig. 2 nicht exakt dargestellt ist und das untere Ende des Rohrs 303 zu weit oben eingezeichnet ist.

Mit anderen Worten, um den Füllstand im Schwebefestbettvergaser 300 sowie die Kohleproduktion noch gezielter steuern zu können, wird erfindungsgemäß eine Absaugvorrichtung am Kopf des Schwebebettvergasers 300 vorgesehen (nicht dargestellt). Vorzugsweise wird im oberen Teil des Schwebebettvergasers 300 ein Rohr 303 so vorgesehen, dass Teilchen von der Oberfläche bzw. Grenzfläche 410 des ausgebildeten Schwebebetts 402 abgesaugt werden können.

Diese einfache Absaugung hat beispielsweise den Vorteil, dass komplexe Füllstandsensoren und damit verbundene Regelungen entfallen können. Durch den kontrollierten Austrag der feinen Partikel kann beispielsweise die Stabilität des Schwebefestbetts weiter erhöht werden. Auch kann auf Lanzen im oberen Bereich verzichtet werden, wodurch sich eine einfache und dennoch stabile Steuerung/Regelung des Schwebebetts ergibt.

Da erfindungsgemäß das produzierte Gas zusammen mit Feststoffteilchen abgesaugt wird, werden die Feststoffteilchen vorzugsweise in einer Filteranlage (nicht dargestellt) herausgefiltert. Im Anschluss daran kann das produzierte Gas nach entsprechender Kühlung und möglichen Energierückgewinnungs- und Reinigungsstrecken zum Betrieb von Wärmekraftmaschinen o.ä. verwendet werden. Alternativ oder zusätzlich kann das produzierte Gas in einem weiteren Veredelungsprozess, bspw. zur Biotreibstoffherstellung, zugeführt, oder bspw. in Brennstoffzellen verwertet werden.

## Patentansprüche

1. Verfahren zum Einstellen des Füllstands in einem Vergaser für kohlenstoffhaltiges Material in Form eines Schwebebettreaktors (300), bei dem Biomasse und/oder Koks (K) in ein Produktgas (403) umgewandelt wird, mit den Schritten:
Bereitstellen eines im Wesentlichen konischen, nach unten verjüngenden Schwebebettreaktors (300), mit einer oberen Reaktordecke (302) und einer unteren Eingangsöffnung (301) in die von unten Biomasse und/oder Koks (K) und ein gasförmiges Vergasungsmittel (V) nach oben in den Schwebebettreaktor (300) eingeführt wird, sodass sich innerhalb des konischen Reaktors (300) ein, vom Ort der Eingangsöffnung abgehobenes, in Schwebe gehaltenes Festbett (402) ausbildet,
wobei die Strömungsgeschwindigkeit des gasförmigen Vergasungsmittels (V) zusammen mit der Biomasse und/oder dem Koks (K) so an die Form des Strömungsquerschnitts des konischen Reaktors (300) unter Berücksichtigung der Materialeigenschaften der Biomasse und/oder dem Koks angepasst wird, dass sich ein stabiles in Schwebe gehaltenes Bett in dem Schwebebettreaktor (300) ausbildet,
wobei die Füllstandhöhe des in Schwebe gehaltenen Festbetts innerhalb des Schwebebettreaktors (300) dadurch eingestellt wird, dass
durch ein in der Reaktordecke (302) nach unten in den Reaktorraum hineinragendes Absaugrohr (303) Gas zusammen mit Partikeln abgesaugt wird, wobei die Position des unteren Endes des Absaugrohrs (303) die obere Position des Schwebebetts innerhalb des Reaktors (300) definiert.

2. Verfahren nach Anspruch 1, wobei das in Schwebe gehaltene Bett (402) eine untere Grenzschicht (400) und eine obere Grenzschicht (410) aufweist und sich zwischen diesen Grenzschichten ausbildet bzw. erstreckt, wobei sich die vertikale Position der oberen Grenzschicht (410) im Wesentlichen auf der gleichen Höhe innerhalb des Reaktors (300) befindet, wie das untere Ende des Rohrs (303).

3. Verfahren nach Anspruch 1 oder 2 wobei die untere Grenzschicht (400) des in Schwebe gehaltenen Betts (402) in Schwebe gehalten wird und nicht auf Gittern und/oder Rosten aufliegt.

4. Verfahren nach Anspruch 1, 2 oder 3, wobei die abgesaugten Partikel/Teilchen nach dem Absaugen aus dem Reaktor (300) durch eine Filtervorrichtung herausgefiltert werden.

5. Verfahren nach einem der vorhergehenden Ansprüche, wobei die Teilchengeschwindigkeit der Partikel/Teilchen die das Bett bilden im Bereich des Festbetts (402) annähernd 0 m/s beträgt, während die Teilchengeschwindigkeit des Gases, das das in Schwebe gehaltene Bett durchströmt, deutlich >> 0 m/s ist.

6. Verfahren nach einem der vorhergehenden Ansprüche, wobei es in einem Schwebebettreaktor (300) mit Schwebebett im Wesentlichen zu keiner axialen Feststoffdurchmischung kommt.

7. Verfahren nach einem der vorhergehenden Ansprüche, wobei die übertragenen Scherkräfte im Schwebebett derart ausgeprägt sind, dass sich ein innerer Reibungswinkel von deutlich >0° ausprägt, vorzugsweise >10°, vorzugsweise >20°, vorzugsweise >30°, vorzugsweise >35° und vorzugsweise <60°, beispielsweise zwischen 35° und 50°.

8. Verfahren nach einem der vorhergehenden Ansprüche, wobei das in Schwebe gehaltene Festbett in dem Schwebebettreaktor (300) als Eigenschaft ein schüttungsmechanisches Horizontallastverhältnis Lambda zwischen 1 und 0 aufweist, also weder 1 (Flüssigkeit) noch 0 (Festkörper), besonders bevorzugt zwischen 0,3 und 0,6.

9. Verfahren nach einem der vorhergehenden Ansprüche, wobei die obere Reaktordecke (302) im Wesentlichen eben und horizontal ausgebildet ist.

10. Verfahren nach einem der vorhergehenden Ansprüche, wobei in den oberen Teil, vorzugsweise im oberen Drittel des in Schwebe gehaltenen Betts mittels einer Lanze zusätzliches Gas zugeführt wird, sodass durch Einführen des zusätzlichen Gases und Absaugung der Partikel sowohl Menge als auch Eigenschaften des austretenden Gasstroms aus dem Reaktor beeinflusst werden kann.

11. System zur Durchführung eines Verfahrens nach einem der Ansprüche 1 bis 10, mit
einem im Wesentlichen konischen Schwebebettreaktor (300);
einer Einrichtung zum Zuführen der Biomasse und/oder des Koks (K) und des Vergasungsmittels (V) von unten nach oben in den Schwebebettreaktor; und
einer Absaugeinrichtung zum Absaugen des Produktgases und Partikeln aus dem Schwebebettreaktor (300), **dadurch gekennzeichnet, dass**
die Absaugeinrichtung mindestens ein Rohr (303) im Deckel (302) des Schwebebettreaktors (300) aufweist, das in das Innere des Schwebebettreaktors (300) hineinragt, durch das Produktgas und Partikel aus dem Schwebebettreaktor abgesaugt werden.

## Claims

1. A process for adjusting the filling level in a gasifier for carbonaceous material in the form of a floating bed reactor (300), in which biomass and/or coke (K) is transformed into a product gas (403), comprising the steps of:
providing a substantially conical, downwardly tapering floating bed reactor (300) comprising an upper reactor ceiling (302) and a lower inlet opening (301) into which biomass and/or coke (K) and a gaseous gasification agent (V) are introduced into the floating bed reactor (300) from the bottom to the top, so that a fixed bed (402), which is elevated from the location of the inlet opening and held in suspension, forms within the conical reactor (300),
wherein the flow rate of the gaseous gasification agent (V) together with the biomass and/or the coke (K) is adapted in such a way to the shape of the flow cross-section of the conical reactor (300) taking into account the material properties of the biomass and/or the coke that a stable bed held in suspension is formed in the floating bed reactor (300),
wherein the filling level of the fixed bed held in suspension within the floating bed reactor (300) is adjusted by
extracting gas, together with particles, through an extraction pipe (303) in the reactor ceiling (302), which pipe protrudes downwardly into the reactor room, wherein the position of the lower end of the extraction pipe (303) defines the upper position of the floating bed within the reactor (300).

2. The process according to claim 1, wherein the floating bed (402) has a lower boundary layer (400) and an upper boundary layer (410) and forms or extends between these boundary layers, the vertical position of the upper boundary layer (410) being at substantially the same level within the reactor (300) as the lower end of the pipe (303) .

3. The process according to claim 1 or 2 wherein the lower boundary layer (400) of the floating bed (402) is held in suspension and does not rest on grids and/or grates.

4. The process according to claim 1, 2 or 3, wherein the extracted particles are filtered out by a filter device after extraction from the reactor (300).

5. The process according to any one of the preceding claims, wherein the velocity of the particles forming the bed is approximately 0 m/s in the region of the fixed bed (402), while the particle velocity of the gas flowing through the bed held in suspension is clearly >> 0 m/s.

6. The process according to any one of the preceding claims, wherein there is substantially no axial mixing of solids in a floating bed reactor (300) with a floating bed.

7. The process according to any one of the preceding claims, wherein the transmitted shear forces in the floating bed are so provided that an internal friction angle of clearly >0° is formed, preferably >10°, preferably >20°, preferably >30°, preferably >35° and preferably <60°, for example between 35° and 50°.

8. The process according to any one of the preceding claims, wherein the fixed bed held in suspension in the floating bed reactor (300) has as a characteristic a bulk-mechanical horizontal load ratio lambda between 1 and 0, i.e. neither 1 (liquid) nor 0 (solid), particularly preferably between 0.3 and 0.6.

9. The process according to any one of the preceding claims, wherein the upper reactor ceiling (302) is substantially flat and horizontal.

10. The process according to any one of the preceding claims, wherein additional gas is fed into the upper part by means of a lance, preferably into the upper third of the bed held in suspension, so that by introducing the additional gas and extracting the particles it is possible to influence both the quantity and the properties of the exiting gas flow from the reactor.

11. A system for carrying out a process according to any one of claims 1 to 10, comprising
a substantially conical floating bed reactor (300);
means for feeding the biomass and/or the coke (K) and the gasification agent (V) into the floating bed reactor from the bottom to the top; and
an extraction device for extracting the product gas and particles from the floating bed reactor (300), **characterized in that**
the extraction device has at least one pipe (303) in the ceiling (302) of the floating bed reactor (300), which pipe extends into the interior of the floating bed reactor (300), through which product gas and particles are extracted from of the floating bed reactor.

## Revendications

1. Procédé d'ajustement du niveau de remplissage dans un gazéificateur pour matière carbonée sous la forme d'un réacteur à lit en suspension (300), dans lequel de la biomasse et/ou du coke (K) sont transformés en un gaz produit (403), comprenant les étapes suivantes :
la fourniture d'un réacteur à lit en suspension (300) essentiellement conique, se rétrécissant vers le bas, avec un plafond de réacteur supérieur (302) et une ouverture d'entrée inférieure (301) dans laquelle de la biomasse et/ou du coke (K) et un agent de gazéification gazeux (V) sont introduits par le bas vers le haut dans le réacteur à lit en suspension (300), de telle sorte qu'il se forme à l'intérieur du réacteur conique (300) un lit fixe (402) maintenu en suspension, soulevé de l'emplacement de l'ouverture d'entrée,
dans lequel la vitesse d'écoulement de l'agent de gazéification gazeux (V) conjointement avec la biomasse et/ou le coke (K) est adaptée à la forme de la section transversale d'écoulement du réacteur conique (300) en tenant compte des propriétés matérielles de la biomasse et/ou du coke, de telle sorte qu'un lit stable maintenu en suspension se forme dans le réacteur à lit en suspension (300),
dans lequel la hauteur du niveau de remplissage du lit fixe maintenu en suspension à l'intérieur du réacteur à lit en suspension (300) est ajustée en ce que
du gaz est aspiré conjointement avec des particules à travers un tube d'aspiration (303) faisant saillie vers le bas dans la chambre de réacteur dans le plafond de réacteur (302), dans lequel la position de l'extrémité inférieure du tube d'aspiration (303) définit la position supérieure du lit en suspension à l'intérieur du réacteur (300).

2. Procédé selon la revendication 1, dans lequel le lit (402) maintenu en suspension présente une couche limite inférieure (400) et une couche limite supérieure (410) et se forme ou s'étend entre ces couches limites, dans lequel la position verticale de la couche limite supérieure (410) se trouve essentiellement à la même hauteur à l'intérieur du réacteur (300) que l'extrémité inférieure du tube (303).

3. Procédé selon la revendication 1 ou 2, dans lequel la couche limite inférieure (400) du lit (402) maintenu en suspension est maintenue en suspension et ne repose pas sur des grilles et/ou des grillages.

4. Procédé selon la revendication 1, 2 ou 3, dans lequel les particules/fragments aspirés sont filtrées par un dispositif de filtration après l'aspiration hors du réacteur (300).

5. Procédé selon l'une quelconque des revendications précédentes, dans lequel la vitesse particulaire des particules qui forment le lit dans la zone du lit fixe (402) est proche de 0 m/s, tandis que la vitesse particulaire du gaz qui traverse le lit maintenu en suspension est nettement >> 0 m/s.

6. Procédé selon l'une quelconque des revendications précédentes, dans lequel essentiellement aucun mélange axial de solides ne se produit dans un réacteur à lit en suspension (300) avec lit en suspension.

7. Procédé selon l'une quelconque des revendications précédentes, dans lequel l'efforts tranchants transmises avec un lit en suspension sont telles qu'un angle de frottement intérieur est nettement > 0°, de préférence > 10°, de préférence > 20°, de préférence > 30°, de préférence > 35° et de préférence < 60°, par exemple compris entre 35° et 50°.

8. Procédé selon l'une quelconque des revendications précédentes, dans lequel le lit fixe maintenu en suspension dans le réacteur à lit en suspension (300) présente comme propriété un rapport de charge horizontale lambda de mécanique de déversement compris entre 1 et 0, c'est-à-dire ni 1 (liquide) ni 0 (solide), de manière particulièrement préférée compris entre 0,3 et 0,6.

9. Procédé selon l'une quelconque des revendications précédentes, dans lequel le plafond de réacteur supérieur (302) est configuré sous forme essentiellement plate et horizontale.

10. Procédé selon l'une quelconque des revendications précédentes, dans lequel du gaz supplémentaire est amené dans la partie supérieure, de préférence dans le tiers supérieur du lit maintenu en suspension, au moyen d'une lance, de telle sorte qu'à la fois la quantité et les propriétés du flux de gaz sortant du réacteur peuvent être influencées par l'introduction du gaz supplémentaire et l'aspiration des particules.

11. Système pour réaliser un procédé selon l'une quelconque des revendications 1 à 10, comprenant
un réacteur à lit en suspension essentiellement conique (300) ;
un appareil pour amener la biomasse et/ou le coke (K) et l'agent de gazéification (V) par le bas vers le haut dans le réacteur à lit en suspension ; et
un appareil d'aspiration pour aspirer le gaz produit et les particules du réacteur à lit en suspension (300), **caractérisé en ce que**
l'appareil d'aspiration présente au moins un tube (303) dans le plafond (302) du réacteur à lit en suspension (300), qui fait saillie à l'intérieur du réacteur à lit en suspension (300), à travers lequel le gaz produit et les particules sont aspirés hors du réacteur à lit en suspension.
